# EUROPEAN PATENT SPECIFICATION

(11) **EP 3 527 354 B1**
(45) Date of publication and mention of the grant of the patent: **03.02.2021**
(21) Application number: 19157305.4
(22) Date of filing: 14.02.2019
(51) Int. Cl.: B29C 65/04, B29C 65/78

(54) **MACHINE FOR WELDING A MEDICAL BAG MADE OF A PLASTIC MATERIAL**
MASCHINE ZUM VERSCHWEISSEN EINES MEDIZINISCHEN BEUTELS AUS EINEM KUNSTSTOFFMATERIAL
MACHINE PERMETTANT DE SOUDER UN SAC MÉDICAL CONSTITUÉ D'UN MATÉRIAU PLASTIQUE

(30) Priority: 16.02.2018 IT 201800002760
(43) Date of publication of application: 21.08.2019
(73) Proprietor: G.E.A.F. S.p.A., 43030 Calestano (PR) (IT)
(72) Inventor: FABIANO, Marco, 43030 Calestano (PR) (IT)
(74) Representative: Fanzini, Valeriano

(56) References cited:
- EP-A2- 0 633 127
- US-A- 2 816 596

## Description

### APPLICATION FIELD OF THE INVENTION

The present finding relates to the field of the welding apparatuses for plastic objects and, more precisely, the machine according to the present invention welds and produces medical bags.

### STATE OF THE ART

Machines for welding plastic materials that provide for carrying out said welding by means of a technology, which is referred to as high-frequency or radio-frequency welding, are known from the state of the art.

Following the molecular agitation induced onto the plastic materials by the simultaneous action of the pressure and the electromagnetic field, a rise in the temperature occurs, which causes the melting and the subsequent welding thereof. The high-frequency welding process ensures a safe and durable joining of different product, also with long lifetimes.

The materials that can be welded with this technique are especially PVC, either flexible or rigid, EVA (ethyl-vinyl-acetate), TPU (polyurethane), and polyolefines.

Among the several applications provided for such machines, there is the welding for producing medical bags.

Said medical bags mainly provide for one or more peripheral weldings of two sheets/films made of a plastic material that are overlapped to compose the bag and a welding of one or more tubes, also made of a plastic material, interposed between the two sheets/films and welded preferably in a peripheral position, so arranged as to be exiting towards the exterior of the bag.

Machines for welding medical bags by radiofrequency, which are able to weld, with quality, tubes on at most two sides of the bag are known.

Document EP0633127 discloses a method ad apparatus making flexible film pouches having fitment tubes attached thereto. The process includes a single operation for the simultaneous sealing of the pouch edge seams and the fitment tubes to the pouch.

Similarly US2816596 relates generally to the manufacture of fluid handling equipment and apparatus and more particularly to uniting sheet and tube components of such apparatus and by dielectric heat sealing method and means.

In known machines, a press is generally present, which comprises a lower plate, which provides for a mould referred to as the counter-electrode, on which the several materials that will compose the bag and that have to be welded are positioned.

During the operative step, an upper plate comprising an electrode for the transmission of high-frequency current overlaps to this lower plate.

In said machines, the welding process usually involves high-frequency electrical currents, of the order of 27-40 MegaHertz.

A high-frequency generator is the element on which this technology is based, which is configured to transform a standard mains voltage into an alternating voltage that is even five times higher.

The critical issue of this technology originates in the fact that the apparatus carries out the welding in succession or concomitantly on different parts of the object, operating in a very reduced space.

During the high-frequency welding inside the welding machine that is the subject-matter, the intensity of the electric field exceeds 1000 Volts/meter and, under these conditions, the geometry and the positioning of each minimal component may turn out to be disastrous, with combined disturbance to the welding of the various parts of the product to be welded.

The difficulty occurs mainly in manufacturing bags with tubes welded on more than one side; in fact, said bags habe reduced dimensions (at most, 300x400mm) and this involves considerable problems in balancing the welding, precisely due to the geometric proximity of those points in which said welding has to be carried out.

Since the space for the paths of the high-frequency alternating current is very limited, there is a high risk that disturbances are triggered, or that abnormal paths of said currents are generated.

Furthermore, the alternating current, in the known machines, tends to prefer, as a return path, during the welding of the tubes, the counter-electrode that is connected to the ground; on the contrary, the electrode does not "call" the return of the current, since, during the welding of the tube, it has not a reference that connects it to the ground.

This involves the implementation of weldings with sub-optimal qualitative levels, and the problem mainly occurs in welding the tubes.

Often, said tubes are not evenly welded to the plastic film, and obvious differences occur between the welding of the upper wall thereof (facing the upper plate) with respect to the lower wall thereof (facing the lower plate). In order to make the welding of the tube in the upper and lower parts thereof more uniform, generally a high pressure of the upper plate on the lower one is exerted, with a high risk of damaging the tubes, bringing them to an ovalization.

Another known solution is to arrange mechanical stops under the tube-holder mandrels (into which the tubes are inserted) to keep them under an upward pressure; however, this bends, arches, and damages within a short time said mandrels.

Furthermore, in the case that the tubes have different diameters, it is extremely difficult to ensure that the proper amount of current arrives to the various tubes as a function of the dimension thereof and the possible resistances that the current may run across in the path between the generator and the individual tube.

A further problem that is found in the traditional machines for manufacturing medical bags with more than two tubes is connected to the production output, because there are very high manufacturing times, since, in order to achieve a better result, it is preferred that the tubes are welded in succession, but not simultaneously.

### DISCLOSURE AND ADVANTAGES OF THE FINDING

The technical problem underlying the present invention is to provide to the art a machine for the high-frequency welding of medical bags structurally and functionally devised to overcome one or more of the limitations set forth above with reference to the mentioned prior art.

Within the scope of the above-mentioned problem, a main object of the invention is to develop a machine for the high-frequency welding of medical bags that allows making the distribution of the alternating current between the upper wall and the lower one of each individual tube uniform.

A further object of the invention is also to provide to the art a machine for the high-frequency welding of medical bags within the scope of a solution that allows welding tubes on more than two sides of the medical bag, in different positions and with also different diameters, while ensuring a high-quality level of the welding between the tube and the film.

Such and other objects are achieved by virtue of the characteristics of the invention set forth in the independent claims. The dependent claims outline preferred and/o particularly advantageous aspects of the invention.

In particular, an implementation of the present invention provides a machine for welding a medical bag, which is made of a plastic material, that is configured to weld a plurality of tubes between a first sheet and a second sheet, and to carry out at least one peripheral welding of the two sheets, comprising a welding press and a high-frequency generator which, by means of a main switch, supplies in an alternating manner either a reticulated circuit configured to weld the tubes or a direct circuit configured to peripherally weld the sheets, where said welding press comprises, in turn, an upper plate to which an electrode suitable to be electrically supplied through the direct circuit is mechanically associated, and a lower plate to which a counter-electrode and locking members are mechanically associated, where the counter-electrode is configured to receive power from the electrode and where the tube-holder mandrels are electrically connected to the reticulated circuit and configured to hold the tubes in place; the welding press further comprises a capacitor, which is electrically connected to the upper plate and connectable to the ground by a switching device that is configured to selectively open/close an electric contact between a closed position, which connects the capacitor to the ground, and an open position, which releases the capacitor from the ground connection, where the position contact is taken when the generator supplies the first circuit to weld the tubes.

By virtue of this solution, during the welding of the tubes, part of the current, which would otherwise tend to direct itself towards the lower plate that is connected to the ground, is called back by the capacitor towards the upper plate, thus allowing balancing the current that flows in the upper and lower walls of the tubes to implement a uniform welding. A further advantage is also given by the fact that this better distribution of the current allows reducing the closing pressure of the welding press, thus reducing the risk of an ovalization of the tubes or a damage to the locking members.

Another aspect of the invention is to provide a welding press in which the switching device comprises a first inductor member, which connects the capacitor to the ground when the switching device is in the closed position.

By virtue of said inductor member that is dimensioned as a function of the number and the dimension of the tubes, it is possible to further balance the distribution of the alternating current.

According to a further aspect of the invention, the welding press further comprises at least one secondary capacitor mechanically associated to conductive members of the first circuit, where said conductive members are suitable to bring power to the tube-holder mandrels.

A preferred form provides a conductive member and a corresponding secondary capacitor for each side of the medical bag in which the tubes to be welded are present.

This solution allows adjusting the distribution of the alternating current of each individual side of the bag in order to optimize the welding of the tubes of each side.

In accordance with an aspect of the invention, each secondary capacitor is electrically and mechanically associated to a secondary inductor member arranged between the capacitor and the ground connection, which defines an inductance that is dimensioned as a function of the dimension and the number of tubes of the side of the medical bag which it is operatively associated to.

Furthermore, an embodiment provides that the secondary capacitors can be moved along the corresponding conductive member.

In such a manner, the distribution of the current on the individual tubes is further optimized, in order to achieve an accurate, uniform, and resistant welding.

A preferred embodiment provides for the conductive members to be connected to the ground through the secondary capacitor and are configured to be electrically supplied by a switching device, which is configured to selectively open/close an electric contact of the first circuit.

Said switching devices of each conductive member are configured to be supplied in parallel so that, during an operative step, only those members that are operatively associated to the sides of the medical bag to be welded are actuated.

By virtue of this solution, it is possible to weld either in a sequential or non-sequential manner the various sides of the medical bag.

Object of the present invention is also to maintain reduced dimensions of the welding press, without incurring the risk that disturbances are triggered, or that abnormal paths of said currents are generated.

For such a reason, the finding provides that the distance of the reticulated circuit from the nearest conductive point has to be greater than or equal to 10 mm, and preferably about 20mm.

Said objects and advantages are all achieved by the machine for welding a medical bag made of a plastic material, which is the subject-matter of the present finding, which is characterized by what is provided for in the claims set forth herein below.

### BRIED DESCRIPTION OF THE FIGURES

This and other characteristics will be more clearly pointed out by the following description of some embodiments, which are illustrated, by way of non-limiting example only, in the attached drawing figures.
- Fig. 1: illustrates in axonometric view a machine for welding medical bags;
- Fig. 2: illustrates in axonometric view a welding press; in particular, the upper plate and the direct circuit and the reticulated circuit are clearly visible;

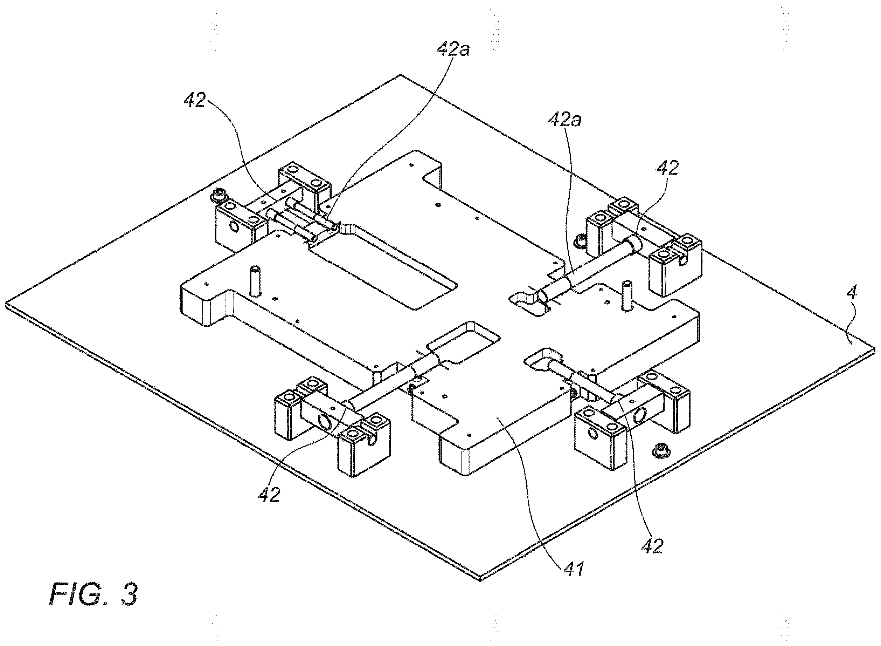

- Fig. 3: illustrates in axonometric view a welding press; in particular, the lower plate and the counter-electrode are clearly visible;
- Fig. 4: illustrates a scheme of the electrical circuit of the machine for welding a medical bag.

### DESCRIPTION OF THE FINDING

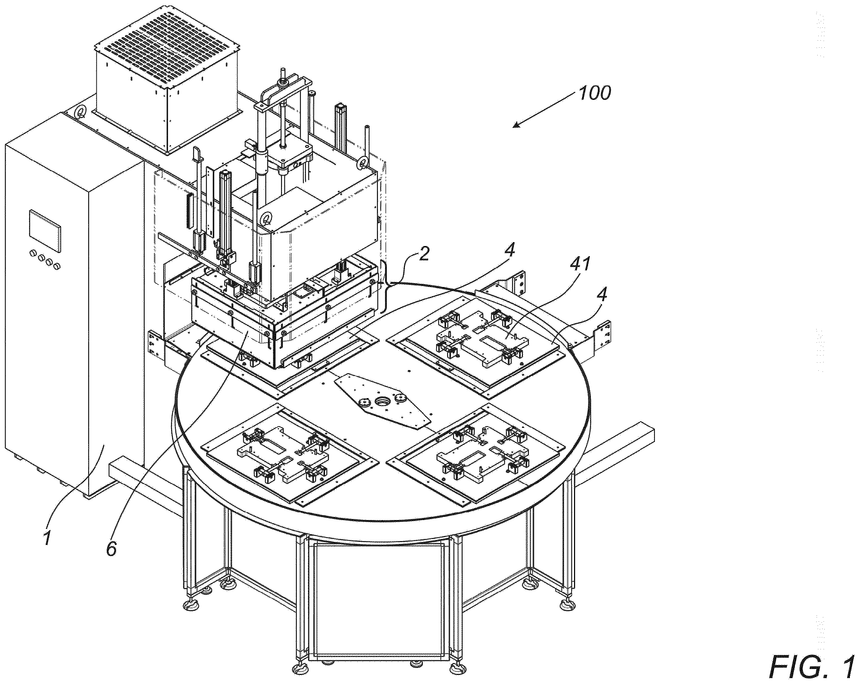

With particular reference to Fig. 1, a machine 100 for welding a medical bag 200 made of a plastic material is represented.

Said medical bag 200 is generally composed of a first sheet 202, to which a second sheet 203 is superimposed, which are welded one to the other by preferably peripheral welding that is adapted to define an inner volume V of the medical bag 200; before carrying out said peripheral welding, one or more tubes 201, also made of a plastic material, are interposed between the first sheet 202 and the second sheet 203, arranged in a peripheral position so as to be exiting towards the exterior of the medical bag 200, so that a tube portion remains inside the peripheral welding and a tube portion projects outwardly to put the inner volume V of the medical bag 200 in communication with the exterior. The tubes 201 arranged as described are then welded both to the first sheet 202 and the second sheet 203.

The machine 100 that is the subject-matter of the present finding is configured so as to be able to manage in a flexible manner different types of medical bags 200; for example, it is able to weld tubes 201 having different diameters, and it is able to manage different configurations, which may provide for even more than one tube 201 for each side of the medical bag 200.

The peripheral welding of the first sheet 202 and the second sheet 203, as well as the welding of the tubes 201, is carried out by a high-frequency current of the order of 27-40 MegaHertz.

According to an aspect of the finding, the machine 100 comprises:
- a high-frequency generator 1 electrically connected to an electrical circuit 5,
- a welding press 2,

Said press comprises, in turn, an upper plate 3, a lower plate 4 and a protective screen 6.

A preferred embodiment provides for an electrode 31 is mechanically associated to the upper plate 3, while it provides for a counter-electrode 41 that is electrically connected to the ground is mechanically associated to the lower plate 4.

The electrode 31 is also referred to as the active electrode, since it transmits current to the counter-electrode 41, which instead is also referred to as the passive electrode, since it is configured to receive said current coming from the electrode 31.

According to an aspect of the finding, the upper plate 3, which is part of the press 2, is movable and configured to bring the electrode 31 and the counter-electrode 41 in contact one to the other and allow the passage of the current both for the peripheral welding of the sheets 202 and 203 and for the welding of the tubes 201; during the contact, a pressure required to complete the welding is exerted.

An embodiment of the finding provides that the counter-electrode 41 is configured to support the first sheet 202 to which the second sheet 203 is superimposed in a resting relationship.

In a preferred embodiment, the lower plate 4 further comprises tube-holder mandrels 42 configured to hold the tubes 201 in place and to transmit the high-frequency current thereto. Said tube-holder mandrels 42 are preferably arranged on each side of the medical bag 200 in which the tubes 201 to be welded are present.

According to an aspect of the finding, said tube-holder mandrels 42 are preferably made of brass or aluminium and so shaped that each tube-holder mandrel 42 comprises at least one projection 42a that is adapted to insert inside each tube 201, which is present on a side of the medical bag 200; said projection 42a is so shaped as to allow the passage of current inside the tubes 201; in fact, following the simultaneous action of the pressure exerted by the welding press 2 and the molecular agitation induced on the tube 201 by the high-frequency current, a rise of the temperature of the tube 201 occurs, which causes the melting and the consequent welding thereof.

A preferred embodiment provides for the high-frequency generator 1 is electrically connected to the electrical circuit 5 to transmit the high-frequency current necessary, both for the peripheral welding of the sheets 202 and 203, and for the welding of the tubes 201.

Said electrical circuit 5 may branch into: a first circuit, which is referred to as a reticulated circuit 53 in the technical jargon, a second circuit or direct circuit 52. This occurs by a main switch 54 that is movable between two positions: one that connects the generator 1 with the first circuit 53 and one that connects it with the second circuit 52 in an alternating manner.

The main switch 54 is in such position as to connect the generator 1 with the first circuit 53, when the welding of the tubes 201 has to be performed, while it is in such a position as to connect the generator 1 with the second circuit 52, when the peripheral welding of the sheets 202 and 203 has to be performed.

According to a preferred embodiment, the first circuit 53 comprises a plurality of conductive members 53b, preferably one for each side of the medical bag 200, suitable to bring high-frequency power to the tube-holder mandrels 42 when the press 2 is in an operative step for the welding of the tubes 201.

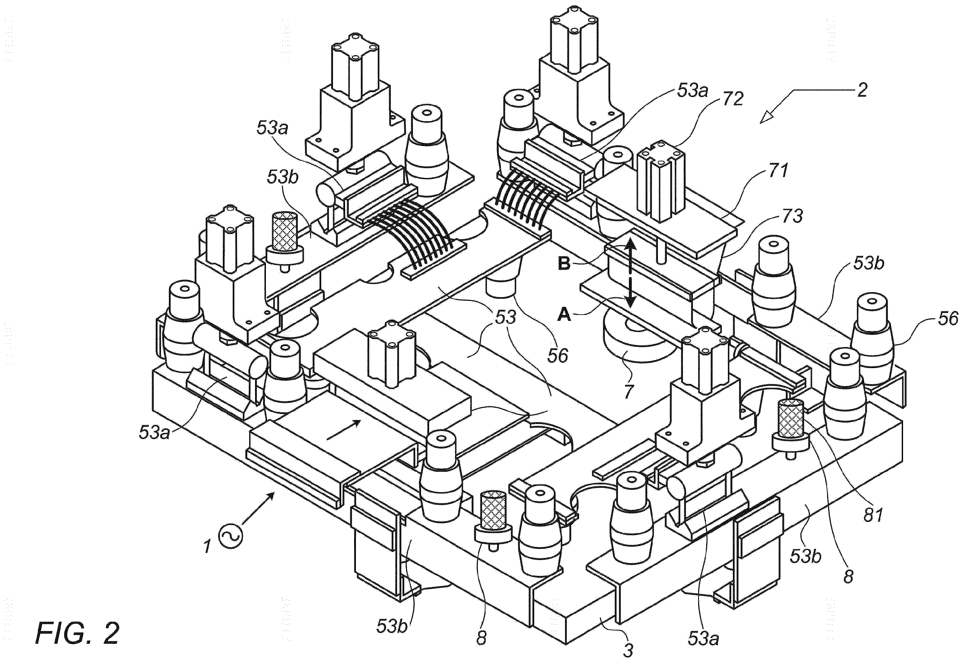

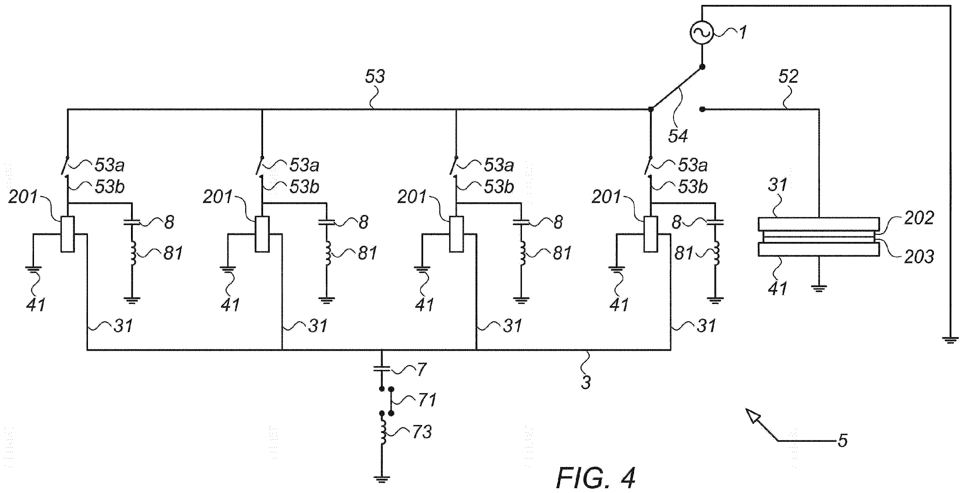

As represented in Fig. 2 or in the circuit diagram of Fig. 4, the first circuit 53 further comprises a plurality of secondary switching devices 53a, preferably one for each side of the perimeter of the bag 200 where the tubes 201 are present. These secondary switching devices 53a serve to connect/disconnect the respective conductive members 53b; therefore, as in the case represented in the figures, if tubes 201 are present on all the four sides of the bag, 4 secondary switching devices 53a will be provided.

Said secondary switching devices 53a are configured to take an open position and a closed position, where the position allowing the passage of current is referred to as the closed position.

As represented in Fig. 2, an embodiment provides that the secondary switching devices 53a are actuated between the open and closed positions by means of pneumatic cylinders.

As represented in the circuit diagram of Fig. 4, the secondary switching devices 53a are preferably arranged on the associated conductive members 53b on the sides of the medical bag 200, in which a tube 201 is provided, and arranged in parallel, so that it is possible to manage the welding of the various tubes 201 even separately.

Said conductive members 53b are preferably planar surfaces that are made of aluminium so that they are suitable in their shape, dimensions, and material, to the conduction of high-frequency alternating current.

On the contrary, the second circuit 52 is configured to bring the current directly on the electrode 31, which, in turn, transfers it to the counter-electrode 41 when the press 2 is in the closed position and is in the operative step of peripheral welding of the sheets 202 and 203.

Therefore, the position of the main switch 54 defines the welding step to be carried out, i.e., the peripheral welding if it is connected to the second circuit 52, or the welding of the tubes if it is connected to the first circuit 53, and in such a case the welding occurs on the branches of the first circuit 53b, the respective secondary switching device 53a of which will be closed.

According to a possible embodiment, said first circuit 53 is mechanically connected to the upper plate 3 and to the protective screen 6 by insulators 56.

In accordance with an aspect of the finding, said first circuit 53 is positioned so as to be sufficiently far from all the conductive parts that are present in the press 2 such as, for example, the upper plate 3.

This distance is necessary in order to avoid that, during the welding step of the tubes 201, the current follows improper paths, thus dispersing in areas where it is not required, with the risk that there is not a sufficient concentration of said current on the tube-holder mandrels 42 that have to receive it in order to weld the tubes 201. These dispersions also involve conseguent safety problems.

A preferred embodiment provides that the distance between the first circuit 53 and the nearest conductive point is not lower than 10mm, and preferably of about 20mm, to ensure the maximum safety.

Therefore, the conductive members 53b of the first circuit 53 are positioned so that their distance from the nearest conductive point is equal to or greater than 10 mm, o further preferably so that the distance from the nearest conductive point is equal to or greater than 20mm.

Greater distances involve considerable dimensional problems, which compromise the functional characteristics of the machine 100.

Furthermore, generally, the medical bags 200 of a larger dimension are implemented with an upper 3 and a lower 4 plates having dimensions as much reduced as possible, which preferably do not exceed 450x550mm. The reduced dimensions, together with the need to manufacture medical bags 200 with more than two welded tubes 201, generates considerable difficulties, especially in balancing the welding, due to the considerable geometric proximity of those points in which said welding has to be carried out.

Since the space for the paths of the high-frequency alternating current is very reduced, there is a high risk that disturbances are triggered, or that abnormal paths of said currents are generated.

Object of the present invention is to allow the implementation of a machine 100 that is capable to implement, within reduced spaces, medical bags 200 having a plurality of tubes 201 even with different diameters, ensuring a high-quality level of the welding.

Due to this reason, a formulation of the present finding provides to implement a welding press 2, which further comprises a capacitor 7 that is electrically connected to the plate 3 and arranged to be connected on the other side to the ground by a switching device 71 configured to move between a first closed position A, which connects the capacitor 7 to the ground reference, and a second open position B, which releases the ground connection of the capacitor 7.

Said switching device 71 is in the first closed position A when the machine 100 carries out the welding of the tubes 201, i.e., when the generator 1 supplies the first circuit 53, vice versa, it is in the second open position B, when the machine 100 carries out the peripheral welding of the sheets 202 and 203, i.e., when the generator 1 supplies the second circuit 52.

In accordance with a possible embodiment, the switching device 71 is actuated by a pneumatic command 72 as represented in Fig. 2.

Function of the capacitor 7 is to create a preferential path to the return passage of the alternating current during the welding of the tubes 201 so as to equilibrate the distribution of said alternating current, in particular between the upper and lower walls of the tube 201.

This configuration allows ensuring high quality standards, which require the symmetry of the welding and a non-ovalization of the tube 201, in addition to a high seal of the welding.

What happens in the absence of the capacitor 7 is described below:
- the switch 54 is in such a position as to allow the passage of the current on the first circuit 53 to get to the tube-holder mandrels 42 (only in the branches in which the secondary switching device 53a turns out to be closed); therefore, from the tube-holder mandrel 42 the current flows into the respective tube 201, but in a non-uniform manner, i.e., it preferentially flows along the lower wall of the tube 201, i.e., the wall of the tube 201 facing the lower plate 4; this occurs because the lower plate 4, to which the tube-holder mandrels 42 are mechanically connected, is connected to the ground; therefore, it tends to call the alternating current most; on the contrary, the upper plate 3, has not a ground reference, therefore it does not call the return of the current, thus carrying a lower amount of current along the upper wall of the tube 201, i.e., the wall of the tube 201 facing the upper plate 3.

This involves a larger welding of the lower wall of the tube 201 compared to the upper one.

A preferred embodiment provides for the capacitor 7 to be mechanically and electrically secured on the upper plate 3 and, if needed, electrically connected to the ground by the switching device 71 which, in turn, as represented in Fig. 2, comprises a first inductor member 73, which connects the capacitor 7 to the ground when the switching device is in the closed position A.

Preferably said first inductor member 73 is manufactured in the shape of a copper or silver strap, secured in contact with the protective screen 6, which is, in turn, connected to the ground.

When the machine 100 is in the operative step of welding of the tubes 201, the switching device 71 is in the first closed position A, which brings the capacitor 7 in contact with the protective screen 6 so as to reduce the call-back effect of the current by the lower plate 4.

In fact, in such a manner, part of the current is called back by the capacitor 7 towards the upper plate 3. This allows balancing the current that flows in the upper and lower walls of the tubes 201, thus generating a uniformity of welding.

On the contrary, when the machine 100 is in the operative step of peripheral welding, the switching device 71 is in the second closed position B so that the capacitor 7 is irrelevant and operatively excluded, in order not to adversely affect the distribution of the current for the peripheral welding, which in this step passes exactly from the upper electrode 31 to the counter-electrode 41.

An aspect of the finding provides that, for convenience's sake, the capacitor 7 is preferably of a ceramic type, but it could also be mechanically built.

The first inductor member 73 is adapted to electrically define a variable inductance as a function of the length and width thereof; said inductance can be dimensioned as a function of the number and the dimension of the tubes 201 to be welded. In this manner, it is possible to balance the amount of current between the lower and upper walls of the tubes 201 to the best.

According to a further preferred embodiment, the welding press 2 further comprises at least one secondary capacitor 8 operatively associated to each side of the medical bag 200 where at least one tube 201 to be welded is present.

Said at least one secondary capacitor 8 is electrically and mechanically associated to the conductive members 53b of the first circuit 53.

The capacitor 8 is preferably positioned on the first circuit 53 with one side being in contact with the conductive member 53b.

As represented in Fig. 2 and in the circuit diagram of Fig. 4, an embodiment provides for a capacitor on each side of the first circuit 53 in which at least one tube 201 to be welded is present.

Each secondary capacitor 8 is then electrically and mechanically connected to the ground by a secondary inductor member 81 preferably manufactured in the shape of a copper or silver strap, which connect them to the protective screen 6, with a ground reference; said secondary inductor member 81 defined an inductance that is preferably dimensioned as a function of the dimension of the tubes 201 of the side of the medical bag 200 which it is associated to.

A further possible embodiment may provide for a capacitor 8 for each tube 201 to be welded.

Said secondary capacitors 8, in a preferred embodiment, are configured to be positioned again on the conductive member 53b, in the case that the position of the tube 201 to be welded changes, or replaced, in the case that the dimension of the tube 201 changes.

Said capacitors 8 are intended to adjust the distribution of the alternating current of each individual side of the bag 200 in order to optimize the welding of the tubes 201 of each side.

In fact, they allow dosing the current on the conductive members 53b, since, as a function of the extent of the capacity thereof, they call an amount of current that is different on each side of the medical bag 200.

Therefore, the capacity of each capacitor 8 has to be dimensioned so as to cope with the dimensional differences of the tubes 201 and their different position, which involves different cases of distribution of the current on the path of the reticulated circuit 53.

Said secondary capacitors 8 become indispensable in a machine 100 in which more than two sides of tubes 201 to be welded are present, and mainly in the case that the tubes 201 are on all the sides of the medical bag 200, and furthermore if said tubes 201 have different diameters; in fact, this configuration involves power needs that are different on each side.

The secondary capacitors 8 become mainly necessary if it is decided to weld the tubes 201 of multiple sides in a single welding step.

In, fact, the welding of the tubes 201 may occur both in a sequential and in a simultaneous manner; the latter is performed in order to reduce the implementation times of the medical bag 200, therefore to increase the production output of the machine.

By virtue of said secondary capacitors 8, it is possible to ensure a high uniformity of welding of the tubes 201 and reliability of the result, besides a high production output of the machine 100.

Furthermore, the machine 100 as configured allows a wide range of adjustment, thus allowing to implement several configurations of medical bags 200, where the position and the dimension of the tubes 201 can be varied along the sides of the medical bag 200.

Therefore, while the main function of the capacitor 7 is to balance the distribution of the alternating current between the upper and lower walls of each tube 201, the function of the capacitors 8 is to more finely tune the distribution of the alternating current on each individual side of the bag 200 ensuring the uniformity of welding for all the tubes 201.

However, it is intended that what has been described above is of a non-limiting, exemplary value.

## Claims

1. A machine (100) for welding a medical bag (200) made of a plastic material and comprising a first sheet (202) and a second sheet (203) separated by a plurality of tubes (201), the machine (100) being configured to weld the tubes (201) between the first sheet (202) and the second sheet (203) and to carry out at least one peripheral welding of the two sheets (202, 203) and comprising a welding press (2) and a high-frequency generator (1) which, by means of a main switch (54), supplies in an alternating manner either a first circuit (53) configured to weld the tubes (201) or a second circuit (52) configured to peripherally weld the sheets (202, 203), wherein said welding press (2) comprises, in turn:
- an upper plate (3) to which an electrode (31) suitable to be electrically supplied through the second circuit (52) is mechanically associated,
- a lower plate (4) to which a counter-electrode (41) and tube-holder mandrels (42) are mechanically associated, where the counter-electrode (41) is configured to receive power from the electrode (31) and where the tube-holder mandrels (42) are electrically connected to the first circuit (53) and configured to hold the tubes (201) in place,
the machine (100) being **characterized in that** the welding press (2) further comprises a capacitor (7) electrically connected to the upper plate (3) and connectable to the ground by a switching device (71) configured to selectively open/close an electric contact between a closed position (A), which connects the capacitor (7) to the ground, and an open position (B), which releases the capacitor (7) from the ground connection, where the closed position (A) is taken when the generator (1) supplies the first circuit (53) to weld the tubes (201).

2. The machine (100) for welding a medical bag (200) according to claim 1, wherein the switching device 71 is in the open position (B), when the generator (1) supplies the second circuit (52) for the peripheral welding of the sheets (202, 203).

3. The machine (100) for welding a medical bag (200) according to the preceding claims, wherein the switching device (71) comprises a primo un inductor member (73) which connects the capacitor (7) to the ground when the switching device is in the closed position (A).

4. The machine (100) for welding a medical bag (200) according to the preceding claims, wherein the welding press (2) further comprises at least one secondary capacitor (8) mechanically associated to conductive members (53b) of the first circuit (53), where said conductive members (53b) are suitable to bring power to the tube-holder mandrels (42).

5. The machine (100) for welding a medical bag (200) according to claim 4, wherein the conductive members (53b) are connected to the ground by the secondary capacitor (8) and configured to be electrically supplied by a secondary switching device (53a), which is configured to selectively open/close an electric contact of the first circuit (53).

6. The machine (100) for welding a medical bag (200) according to the claims 4 and 5, wherein a conductive member (53b) and a corresponding secondary capacitor (8) are provided for each side of the medical bag (200) in which the tubes (201) to be welded are present.

7. The machine (100) for welding a medical bag (200) according to one of the claims 4 to 6, wherein a secondary inductor member (81) arranged between the capacitor (8) and the ground connection is electrically and mechanically associated to each secondary capacitor (8).

8. The machine (100) for welding a medical bag (200) according to one of the claims 4 to 7, wherein the secondary switching devices (53a) of each conductive member (53b) are configured to be supplied in parallel so that, during an operative step, only those members that are operatively associated to the sides of the medical bag (200) to be welded are actuated.

9. The machine (100) for welding a medical bag (200) according to one of the claims 4 to 8, wherein the secondary capacitors (8) are configured to be moved along the conductive members (53b).

10. The machine (100) for welding a medical bag (200) according to one of the claims 2 to 4, wherein the first circuit (53) is positioned so that the distance thereof from the nearest conductive point is equal to or greater than 10 mm.

11. The machine (100) for welding a medical bag (200) according to one of the claims 2 to 4, wherein the first circuit (53) is positioned so that the distance thereof from the nearest conductive point is equal to or greater than 20mm.

## Patentansprüche

1. Maschine (100) zum Schweißen eines aus einem Kunststoffmaterial gebildeten medizinischen Beutels (200), der eine erste Folie (202) und eine zweite Folie (203) umfasst, die durch mehrere Rohre (201) getrennt sind, wobei die Maschine (100) ist konfiguriert zum Schweißen der Rohre (201) zwischen der ersten Folie (202) und der zweiten Folie (203) und zum Durchführen mindestens eines Umfangsschweißens der beiden Folien (202, 203) und umfassend eine Schweißpresse (2) und einen Hochfrequenzgenerator (1), der mittels eines Hauptschalters (54) abwechselnd einen ersten Stromkreis (53) liefert, der zum Schweißen der Rohre (201) konfiguriert ist, oder einen zweiten Stromkreis (52), der zum Umfangschweißen der Folien (203, 203) konfiguriert ist, wobei die Schweißpresse (2) in der Reihenfolge umfasst:
- eine obere Platte (3), der mechanisch eine Elektrode (31) zugeordnet ist, die zur elektrischen Stromversorgung mittels des zweiten Stromkreis (52) geeignet ist;
- eine untere Platte (4), der eine gegenüberliegende Elektrode (41) und Rohrhalterdorne (42) mechanisch zugeordnet sind, wobei die gegenüberliegende Elektrode (41) derart konfiguriert ist, dass sie Energie von der Elektrode (31) empfängt, und wobei die Rohrhalterdorne (42) elektrisch mit dem ersten Stromkreis (53) verbunden und konfiguriert sind, um Rohre (201) in Position zu halten,
wobei die Maschine (100) ist **dadurch gekennzeichnet, dass** die Schweißpresse (2) ferner einen Kondensator (7) umfasst, der elektrisch mit der oberen Platte (3) verbunden und mittels einer Schaltvorrichtung (71) mit Erde verbindbar und derart konfiguriert ist, dass er einen elektrischen Kontakt zwischen einer geschlossenen Position (A), die den Kondensator (7) mit der Erde verbindet, und einer offenen Position (B), die den Kondensator (7) von der Erdungsverbindung trennt, selektiv öffnet/schließt; wobei die geschlossene Position (A) angenommen wird, wenn der Generator (1) den ersten Stromkreis (53) zum Schweißen der Rohre (201) versorgt.

2. Maschine (100) zum Schweißen eines medizinischen Beutels (200) nach Anspruch 1, wobei sich die Schaltvorrichtung 71 in der offenen Position (B) befindet, wenn der Generator (1) den zweiten Stromkreis (52) für das Umfangsschweißen der Folien (202, 203), versorgt.

3. Maschine (100) zum Schweißen eines medizinischen Beutels (200) gemäß den vorhergehenden Ansprüchen, wobei die Schaltvorrichtung (71) zunächst ein Induktor-Element (73) umfasst, das den Kondensator (7) mit der Erde verbindet, wenn die Schaltvorrichtung sich in der geschlossenen Position (A) befindet.

4. Maschine (100) zum Schweißen eines medizinischen Beutels (200) gemäß den vorhergehenden Ansprüchen, wobei die Schweißpresse (2) ferner mindestens einen Sekundärkondensator (8) umfasst, der mechanisch mit leitenden Elementen (53b) des ersten Stromkreises (53) verbunden ist, wobei die leitenden Elemente (53b) Energie zu den Rohrhalterdornen (42) bringen können.

5. Maschine (100) zum Schweißen eines medizinischen Beutels (200) nach Anspruch 4, wobei die leitenden Elemente (53b) mittels des Sekundärkondensators (8) mit der Erde verbunden und derart konfiguriert sind, dass sie mittels eines elektrisch betriebenen sekundären Schaltvorrichtung (53a) versorgt werden, die konfiguriert ist, um einen elektrischen Kontakt des ersten Stromkreises (53) selektiv zu öffnen/schließen.

6. Maschine (100) zum Schweißen eines medizinischen Beutels (200) nach Ansprüchen 4 und 5, wobei ein leitendes Element (53b) und ein entsprechender Sekundärkondensator (8) für jede Seite des medizinischen Beutels (200) vorgesehen sind, in dem Rohre (201) zu schweißen sind.

7. Maschine (100) zum Schweißen eines medizinischen Beutels (200) nach einem der Ansprüche 4 bis 6, wobei ein sekundäres Induktor-Element (81), das zwischen dem Kondensator (8) und der Erdungsverbindung angeordnet ist, elektrisch und mechanisch jedem Sekundärkondensator (8) zugeordnet ist.

8. Maschine (100) zum Schweißen eines medizinischen Beutels (200) nach einem der Ansprüche 4 bis 7, wobei die sekundären Schaltvorrichtungen (53a) jedes leitenden Elements (53b) derart konfiguriert sind, dass sie parallel zugeführt werden, wodurch während einer operativen Phase nur diejenigen Elemente aktiviert werden, die operativ mit den Seiten des zu verschließenden medizinischen Beutels (200) verbunden sind.

9. Maschine (100) zum Schweißen eines medizinischen Beutels (200) nach einem der Ansprüche 4 bis 8, wobei die Sekundärkondensatoren (8) derart konfiguriert sind, dass sie entlang der leitenden Elemente (53b) bewegt werden.

10. Maschine (100) zum Schweißen eines medizinischen Beutels (200) nach einem der Ansprüche 2 bis 4, wobei der erste Stromkreis (53) derart positioniert ist, dass sein Abstand vom nächsten leitenden Punkt gleich oder größer als 10 mm ist.

11. Maschine (100) zum Schweißen eines medizinischen Beutels (200) nach einem der Ansprüche 2 bis 4, wobei der erste Stromkreis (53) derart positioniert ist, dass sein Abstand vom nächsten leitenden Punkt gleich oder größer als 20 mm ist.

## Revendications

1. Machine (100) pour souder un sac médical (200) formé à partir d'une matière plastique et comprenant une première feuille (202) et une deuxième feuille (203) séparées par une pluralité de tubes (201), la machine (100) étant configurée pour souder les tubes (201) entre la première feuille (202) et la deuxième feuille (203) et pour effectuer au moins un soudage périphérique des deux feuilles (202, 203) et comprenant une presse à souder (2) et un générateur à haute fréquence (1) qui, au moyen d'un interrupteur principal (54), alimente en alternance un premier circuit (53) configuré pour souder les tubes (201) ou un deuxième circuit (52) configuré pour souder en périphérie les feuilles (202, 203), dans laquelle ladite presse à souder (2) comprend, dans l'ordre:
- une plaque supérieure (3) à laquelle est mécaniquement associée une électrode (31), apte à être alimentée électriquement au moyen du deuxième circuit (52),
- une plaque inférieure (4) à laquelle une électrode opposée (41) et des mandrins porte-tube (42) sont mécaniquement associés, où l'électrode opposée (41) est configurée pour recevoir l'énergie de l'électrode (31) et où les mandrins porte-tube (42) sont connectés électriquement au premier circuit (53) et sont configurés pour maintenir les tubes (201) en position,
la machine (100) étant **caractérisée en ce que** la presse à souder (2) comprend en outre un condensateur (7) connecté électriquement à la plaque supérieure (3) et connectable à la terre au moyen d'un dispositif de commutation (71) configuré pour ouvrir/fermer sélectivement un contact électrique entre une position fermée (A), qui relie le condensateur (7) à la terre, et une position ouverte (B), qui sépare le condensateur (7) de la prise de terre, où la position fermée (A) est prise lorsque le générateur (1) alimente le premier circuit (53) pour souder les tubes (201).

2. Machine (100) pour souder un sac médical (200) selon la revendication 1, dans laquelle le dispositif de commutation 71 est en position ouverte (B), lorsque le générateur (1) alimente le deuxième circuit (52) pour le soudage périphérique des feuilles (202, 203).

3. Machine (100) pour souder un sac médical (200) selon les revendications précédentes, dans laquelle le dispositif de commutation (71) comprend tout d'abord un élément inducteur (73) qui relie le condensateur (7) à la terre lorsque le dispositif de commutation est en position fermée (A).

4. Machine (100) pour souder un sac médical (200) selon les revendications précédentes, dans laquelle la presse à souder (2) comprend en outre au moins un condensateur secondaire (8) associé mécaniquement à des éléments conducteurs (53b) du premier circuit (53), où lesdits éléments conducteurs (53b) sont capables de transporter de l'énergie vers les mandrins porte-tube (42) .

5. Machine (100) pour souder un sac médical (200) selon la revendication 4, dans laquelle les éléments conducteurs (53b) sont connectés à la terre au moyen du condensateur secondaire (8) et sont configurés pour être alimentés électriquement au moyen d'un dispositif de commutation secondaire (53a), qui est configuré pour ouvrir/fermer sélectivement un contact électrique du premier circuit (53).

6. Machine (100) pour souder un sac médical (200) selon les revendications 4 et 5, dans laquelle un élément conducteur (53b) et un condensateur secondaire correspondant (8) sont prévus pour chaque côté du sac médical (200) dans lequel il y a des tubes (201) à souder.

7. Machine (100) pour souder un sac médical (200) selon l'une des revendications 4 à 6, dans laquelle un élément inducteur secondaire (81) disposé entre le condensateur (8) et la prise de terre est associé électriquement et mécaniquement à chaque condensateur secondaire (8).

8. Machine (100) pour souder un sac médical (200) selon l'une des revendications 4 à 7, dans laquelle les dispositifs de commutation secondaires (53a) de chaque élément conducteur (53b) sont configurés pour être alimentés en parallèle, de telle sorte que pendant une phase opérationnelle, seuls les éléments qui sont associés fonctionnellement aux côtés du sac médical (200) à souder sont activés.

9. Machine (100) pour souder un sac médical (200) selon l'une des revendications 4 à 8, dans laquelle les condensateurs secondaires (8) sont configurés pour être déplacés le long des éléments conducteurs (53b).

10. Machine (100) pour souder un sac médical (200) selon l'une des revendications 2 à 4, dans laquelle le premier circuit (53) est positionné de telle sorte que sa distance du point conducteur le plus proche soit égale ou supérieure à 10 mm.

11. Machine (100) pour souder un sac médical (200) selon l'une des revendications 2 à 4, dans laquelle le premier circuit (53) est positionné de telle sorte que sa distance du point conducteur le plus proche soit égale ou supérieure à 20 mm.
